# EUROPÄISCHE PATENTANMELDUNG

(11) **EP 4 287 470 A1**
(43) Veröffentlichungstag der Anmeldung: **06.12.2023**
(21) Anmeldenummer: 23020134.5
(22) Anmeldetag: 17.03.2023
(51) Int. Cl.: H02K 9/197, B60K 1/00

(54) **ANTRIEBSEINHEIT**

(30) Priorität: 30.05.2022 DE 102022113565
(71) Anmelder: Dr. Ing. h.c. F. Porsche Aktiengesellschaft, 70435 Stuttgart (DE)
(72) Erfinder: Oechslen, Stefan, 70176 Stuttgart (DE); Kübler, Simon, 74199 Untergruppenbach Unterheinriet (DE)

(57) **Zusammenfassung**

Eine Antriebseinheit (20) weist einen Elektromotor (30) und ein Kühlsystem (50) auf, welcher Elektromotor (30) eine Statoranordnung (32) und eine Rotoranordnung (34) aufweist, welche Statoranordnung (32) ein Statorgehäuse (40), einen Statorkern (36) mit Nuten (37) und eine Wicklungsanordnung (38) umfasst, welche Wicklungsanordnung (38) sich durch die Nuten (37) erstreckt, welches Statorgehäuse (40) einen Statorgehäuseeinlass (41) und einen Statorgehäuseauslass (42) aufweist, welche Nuten (37) in Fluidverbindung mit dem Statorgehäuseeinlass (41) und mit dem Statorgehäuseauslass (42) stehen, welches Kühlsystem (50) einen ersten Kühlkreislauf (51) aufweist, welcher mit dem Statorgehäuseeinlass (41) und mit dem Statorgehäuseauslass (42) verbunden ist, und welcher erste Kühlkreislauf (51) eine Ausgleichsbehälteranordnung (60) aufweist, welche Ausgleichsbehälteranordnung (60) einen Ausgleichsbehälter (62), mindestens einen Ausgleichsbehältereinlass (65), einen Ausgleichsbehälterauslass (66) und eine Druckausgleichsanordnung (64) aufweist, welcher Ausgleichsbehälter (62) über den mindestens einen Ausgleichsbehältereinlass (65) und den Ausgleichsbehälterauslass (66) mit dem ersten Kühlkreislauf (51) verbunden ist, welche Druckausgleichsanordnung (64) dazu eingerichtet ist, zumindest zeitweise eine Fluidverbindung zwischen dem Ausgleichsbehälter (62) und der Außenumgebung (61) der Antriebseinheit (20) zu ermöglichen, um zumindest teilweise einen Druckausgleich zwischen dem Ausgleichsbehälter (62) und der Außenumgebung (61) zu bewirken.

## Beschreibung

Die Erfindung betrifft eine Antriebseinheit und ein Elektrofahrzeug.

Die DE 10 2013 019 687 B3 zeigt ein Kühlsystem für ein Hybridfahrzeug, welches einen Ölkreislauf und einen Wasserkühlkreislauf aufweist.

Die EP 3 184 336 A1 zeigt ein Kühlsystem für ein Elektrofahrzeug mit einem Elektromotor, einem Inverter und einem Getriebe, bei dem mittels eines ersten Ölkreislaufs der Inverter und Elektromotor gekühlt werden.

Die WO 2019 / 182 622 A1 zeigt ein Kühlsystem für ein Elektrofahrzeug, welches einen Glykol-Wasser-Kühlkreislauf und einen Öl-Kreislauf aufweist.

Die DE 10 2005 032 633 A1 zeigt ein Kühlsystem für ein elektromechanisches Bauteil und ein Getriebe mit Kühlung durch ein Getriebeöl.

Es ist daher eine Aufgabe der Erfindung, eine neue Antriebseinheit und ein neues Elektrofahrzeug bereitzustellen.

Diese Aufgabe wird gelöst durch die Gegenstände der nebengeordneten Patentansprüche.

Eine Antriebseinheit für ein Elektrofahrzeug weist einen Elektromotor zum Antrieb und ein Kühlsystem auf, welcher Elektromotor eine Statoranordnung und eine Rotoranordnung aufweist, welche Statoranordnung ein Statorgehäuse, einen Statorkern mit Nuten und eine Wicklungsanordnung umfasst, welche Wicklungsanordnung sich durch die Nuten erstreckt, welches Statorgehäuse einen Statorgehäuseeinlass und einen Statorgehäuseauslass aufweist, welche Nuten in Fluidverbindung mit dem Statorgehäuseeinlass und mit dem Statorgehäuseauslass stehen, welches Kühlsystem einen ersten Kühlkreislauf aufweist, welcher mit dem Statorgehäuseeinlass und mit dem Statorgehäuseauslass verbunden ist, um eine direkte Kühlung der Wicklungsanordnung zu ermöglichen, und welcher erste Kühlkreislauf eine Ausgleichsbehälteranordnung aufweist, welche Ausgleichsbehälteranordnung einen Ausgleichsbehälter, mindestens einen Ausgleichsbehältereinlass, mindestens einen Ausgleichsbehälterauslass und eine Druckausgleichsanordnung aufweist, welcher Ausgleichsbehälter über den mindestens einen Ausgleichsbehältereinlass und den Ausgleichsbehälterauslass mit dem ersten Kühlkreislauf verbunden ist, welche Druckausgleichsanordnung dazu eingerichtet ist, zumindest zeitweise eine Fluidverbindung zwischen dem Ausgleichsbehälter und der Außenumgebung der Antriebseinheit zu ermöglichen, um zumindest teilweise einen Druckausgleich zwischen dem Ausgleichsbehälter und der Außenumgebung zu bewirken.

Das Vorsehen der Druckausgleichsanordnung ermöglicht eine Begrenzung des im ersten Kühlkreislauf auftretenden Drucks, und die Elemente des Kühlkreislaufs können für niedrigere Maximaldrücke und damit auch leichter und kostengünstiger ausgelegt werden. Man kann von einem offenen bzw. teiloffenen Kühlkreislauf sprechen.

Gemäß einer bevorzugten Ausführungsform ist die Statoranordnung als Außen-Statoranordnung und die Rotoranordnung als Innen-Rotoranordnung ausgebildet. Eine Direktkühlung ist hierbei besonders vorteilhaft möglich.

Gemäß einer bevorzugten Ausführungsform ist die Druckausgleichanordnung dazu eingerichtet, den Druckausgleich in Abhängigkeit vom Differenzdruck zwischen dem Ausgleichsbehälter und der Außenumgebung zu bewirken.

Gemäß einer bevorzugten Ausführungsform weist der erste Kühlkreislauf ein erstes Kühlmittel auf. Kühlmittel ermöglicht eine gute Kühlung, und es ist bevorzugt ein Fluid, insbesondere ein flüssiges Fluid.

Gemäß einer bevorzugten Ausführungsform ist das erste Kühlmittel ein dielektrisches Kühlmittel. Dielektrische Kühlmittel sind besonders gut zum Kühlen einer Wicklungsanordnung geeignet, und auf Grund der temperaturabhängigen Volumenausdehnung von dielektrischen Kühlmitteln ist die Ausgleichsbehälteranordnung besonders vorteilhaft.

Gemäß einer bevorzugten Ausführungsform weist die Druckausgleichsanordnung eine erste Filtervorrichtung auf, welche erste Filtervorrichtung dazu eingerichtet ist, einen Austritt des Kühlmittels in die Außenumgebung zu verringern. Dies führt zu einer besseren Umweltverträglichkeit der gesamten Antriebseinheit.

Gemäß einer bevorzugten Ausführungsform weist die erste Filtervorrichtung einen Aktivkohlefilter auf. Aktivkohlefilter sind besonders gut geeignet, das Kühlmittel zurückzuhalten und nur die Luft durchzulassen.

Gemäß einer bevorzugten Ausführungsform weist die Druckausgleichsanordnung ein erstes Ventil auf, welches dazu ausgebildet ist, von einem nichtleitenden Zustand in einen leitenden Zustand überzugehen, wenn der Druck im Ausgleichsbehälter um mindestens einen vorgegebenen ersten Betrag höher ist als der Druck in der Außenumgebung, um bei einem Überdruck im Ausgleichsbehälter zumindest teilweise den Druckausgleich zu bewirken. Es muss also ein Differenzdruck mit dem ersten Betrag vorhanden sein, welcher erste Betrag ungleich Null ist. Bevorzugt schließt das erste Ventil wieder, wenn der Differenzdruck betragsmäßig einen weiteren vorgegebenen Wert unterschreitet. Anders ausgedrückt geht das erste Ventil vom leitenden in den nicht leitenden Zustand über, wenn der Druckausgleich stattgefunden hat bzw. der Differenzdruck durch den Druckausgleich unter einen vorgegebenen Schwellenwert gesunken ist. Der Wechsel zwischen dem nicht leitenden Zustand und dem leitenden Zustand kann mit oder ohne Hysterese erfolgen.

Gemäß einer bevorzugten Ausführungsform weist das erste Ventil eine erste Feder auf, und der vorgegebene erste Betrag ist durch die Federkraft der ersten Feder beeinflusst. Dies ermöglicht eine einfache Ausgestaltung eines Überdruckventils.

Gemäß einer bevorzugten Ausführungsform weist die Druckausgleichsanordnung ein zweites Ventil auf, welches dazu ausgebildet ist, von einem nicht leitenden Zustand in einen leitenden Zustand überzugehen, wenn der Druck in der Außenumgebung um mindestens einen vorgegebenen zweiten Betrag höher ist als der Druck im Ausgleichsbehälter, um bei einem Unterdruck im Ausgleichsbehälter zumindest teilweise den Druckausgleich zu bewirken. Bei einem entsprechenden Differenzdruck mit dem zweiten Betrag, welcher zweite Betrag ungleich Null ist, findet somit ein Druckausgleich statt, jedoch bevorzugt nicht auf eine Druckdifferenz Null. Bevorzugt schließt das zweite Ventil wieder, wenn der Differenzdruck betragsmäßig einen weiteren vorgegebenen Wert unterschreitet. Anders ausgedrückt geht das zweite Ventil vom leitenden in den nicht leitenden Zustand über, wenn der Druckausgleich stattgefunden hat bzw. der Differenzdruck durch den Druckausgleich unter einen vorgegebenen Schwellenwert gesunken ist. Der Wechsel zwischen dem nicht leitenden Zustand und dem leitenden Zustand kann mit oder ohne Hysterese erfolgen.

Das erste Ventil und das zweite Ventil können als getrennte Ventile ausgebildet sein oder aber als gemeinsames Ventil, welches beide Funktionen ermöglicht.

Gemäß einer bevorzugten Ausführungsform weist das zweite Ventil eine zweite Feder auf, und der vorgegebene zweite Betrag ist durch die Federkraft der zweiten Feder beeinflusst.

Gemäß einer bevorzugten Ausführungsform weist die Druckausgleichsanordnung eine Entfeuchtungsvorrichtung auf, welche Entfeuchtungsvorrichtung dazu eingerichtet ist, eine Entfeuchtung von aus der Außenumgebung in den Ausgleichsbehälter eintretender Luft durchzuführen.

Gemäß einer bevorzugten Ausführungsform weist die Druckausgleichsanordnung eine zweite Filtervorrichtung auf, welche zweite Filtervorrichtung dazu eingerichtet ist, einen Eintritt von Schmutz durch aus der Außenumgebung in den Ausgleichsbehälter eintretende Luft zu verringern oder zu verhindern.

Gemäß einer bevorzugten Ausführungsform weist die Antriebseinheit einen zweiten Kühlkreislauf und eine Pumpvorrichtung auf, welche Pumpvorrichtung eine erste Pumpe und eine zweite Pumpe aufweist, welche erste Pumpe dazu eingerichtet ist, im ersten Kühlkreislauf ein erstes Kühlmittel zu fördern, und welche zweite Pumpe dazu eingerichtet ist, im zweiten Kühlkreislauf ein zweites Kühlmittel zu fördern, welches erste Kühlmittel und welches zweite Kühlmittel unterschiedlich sind. Die Bereitstellung unterschiedlicher Kühlmittel ermöglicht eine optimierte Kühlung unterschiedlicher Vorrichtungen.

Gemäß einer bevorzugten Ausführungsform ist die Pumpvorrichtung dazu eingerichtet, die erste Pumpe und die zweite Pumpe durch einen gemeinsamen Pumpenantrieb anzutreiben, beispielsweise durch einen hierfür vorgesehenen zusätzlichen Elektromotor.

Gemäß einer bevorzugten Ausführungsform weist die Antriebseinheit einen dritten Kühlkreislauf auf, der erste Kühlkreislauf weist einen ersten Wärmetauscher auf und der zweite Kühlkreislauf einen zweiten Wärmetauscher, und der dritte Kühlkreislauf ist dazu eingerichtet, den ersten Wärmetauscher und den zweiten Wärmetauscher zu kühlen. Diese Mehrfachnutzung ergibt ein verbessertes Gesamtkonzept und ermöglicht eine Verringerung des Gesamtgewichts.

Ein Elektrofahrzeug weist eine solche Antriebseinheit auf. Für Fahrzeuge ist die Antriebseinheit besonders gut geeignet, da die Sicherheit der gesamten Antriebseinheit vergleichsweise hoch ist.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen sowie aus den Unteransprüchen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigt:
- Fig. 1: in schematischem Längsschnitt einen Elektromotor,
- Fig. 2: in schematischen Querschnitt eine Statoranordnung des Elektromotors von Fig. 1,
- Fig. 3: in schematischer Darstellung ein Kühlsystem mit dem Elektromotor von Fig. 1 und mit einem Ausgleichsbehälter,
- Fig. 4: den Ausgleichsbehälter von Fig. 3, und
- Fig. 5: ein Diagramm mit Differenzdrücken.

Im Folgenden sind gleiche oder gleich wirkende Teile mit den gleichen Bezugszeichen versehen und werden üblicherweise nur einmal beschrieben. Die Beschreibung ist figurenübergreifend aufeinander aufbauend, um unnötige Wiederholungen zu vermeiden.

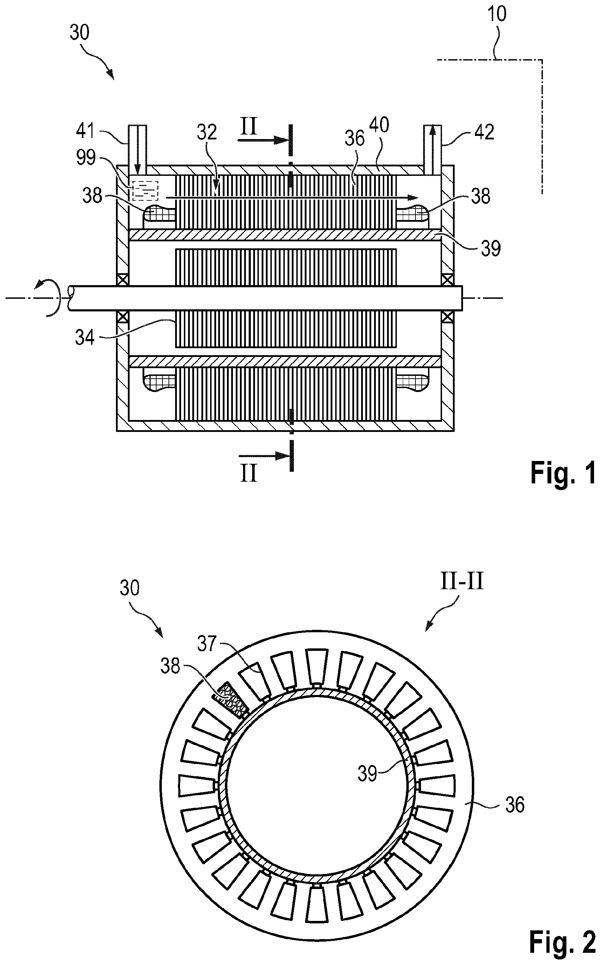

Fig. 1 zeigt einen Elektromotor 30 zum Antrieb eines Elektrofahrzeugs 10. Ein solcher Elektromotor 30 wird auch als Antriebsmotor bezeichnet, und er kann bevorzugt zusätzlich generatorisch arbeiten.

Der Elektromotor 30 hat eine Statoranordnung 32 und eine Rotoranordnung 34. Die Statoranordnung 32 hat ein Statorgehäuse 40, ein Spaltrohr 39, einen Statorkern 36 und eine Wicklungsanordnung 38.

Der Statorkern 36 ist üblicherweise als Blechpaket ausgebildet.

Von der Wicklungsanordnung 38 sind in der Darstellung nur die Wickelköpfe auf den beiden axialen Seiten des Statorkerns 36 sichtbar.

Das Statorgehäuse 40 hat einen Statorgehäuseeinlass 41 und einen Statorgehäuseauslass 42, über welche der Elektromotor 30 an einen Kühlmittelkreislauf anschließbar ist. Schematisch ist ein Kühlmittel 99 eingezeichnet.

**Fig. 2** zeigt den Elektromotor 30 von Fig. 1 in einem Querschnitt entlang der Linie II-II von Fig. 1.

Der Statorkern 36 hat Nuten 37, durch die sich - schematisch in einer Nut 37 angedeutet - die Wicklungsanordnung 38 erstreckt. Bevorzugt ist auf der radial inneren Seite des Statorkerns 36 das Spaltrohr 39 vorgesehen, um eine Abdichtung zum Innenrotor 34 (vgl. Fig. 1) hin zu gewährleisten. Die Nuten 37 stehen sowohl in Fluidverbindung mit dem Statorgehäuseeinlass 41 als auch mit dem Statorgehäuseauslass 42. Hierdurch kann das Kühlmittel 99 von Fig. 1 durch die Nuten 37 fließen und die Wicklungsanordnung 38 gut kühlen. Dies wird auch als direkte Kühlung der Wicklungsanordnung 38 bezeichnet. Das Kühlmittel 99 fließt hierbei in den Nuten direkt an den Drähten der Wicklungsanordnung 38 entlang und kühlt diese großflächig.

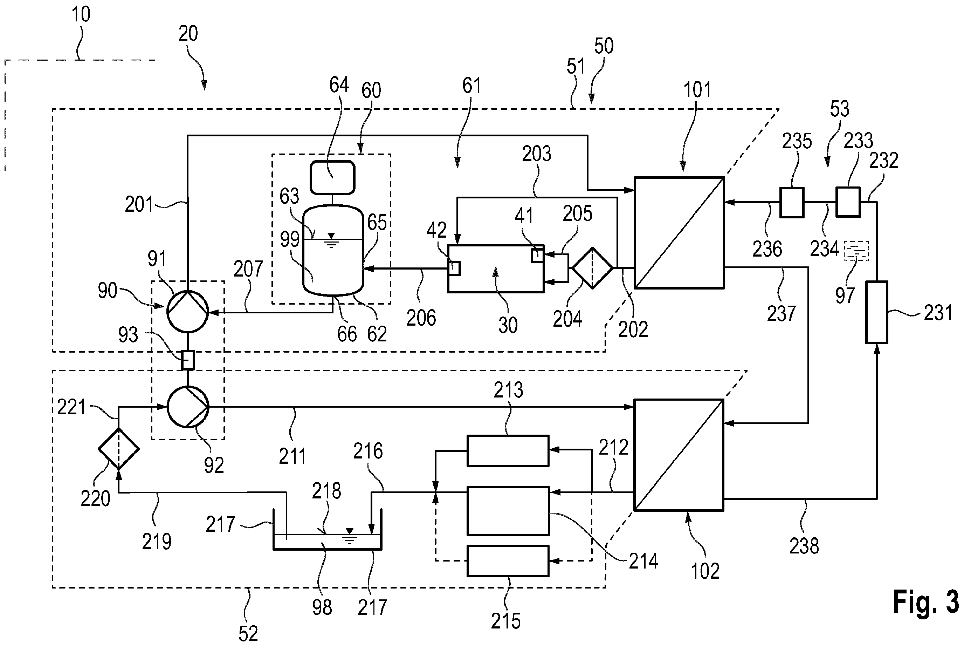

**Fig. 3** zeigt in einer schematischen Darstellung ein Elektrofahrzeug 10 mit einer Antriebseinheit 20. Beim Elektrofahrzeug 10 kann es sich um ein reines Elektrofahrzeug oder aber auch um ein Hybrid-Elektrofahrzeug handeln.

Die Antriebseinheit 20 hat den Elektromotor 30 und ein Kühlsystem 50.

Das Kühlsystem 50 hat einen ersten Kühlkreislauf 51, einen zweiten Kühlkreislauf 52 und einen dritten Kühlkreislauf 53. Eine Pumpvorrichtung 90 weist eine erste Pumpe 91 und eine zweite Pumpe 92 auf.

Der erste Kühlkreislauf 51 umfasst im Ausführungsbeispiel die erste Pumpe 91, welche über eine Leitung 201 mit einem Wärmetauscher 101 verbunden ist, und der Wärmetauscher 101 ist einerseits über eine Leitung 202 mit einem Filter 204 und andererseits über eine Leitung 203 mit dem Elektromotor 30 verbunden.

Der Filter 204 ist über eine Leitung 205 mit dem Elektromotor 30 verbunden. Der Elektromotor 30 ist über eine Leitung 206 mit einer Ausgleichsbehälteranordnung 60 verbunden, und die Ausgleichsbehälteranordnung 60 ist über eine Leitung 207 mit der ersten Pumpe 91 verbunden.

Im Ausführungsbeispiel wird die Leitung 205 dem Statorgehäuseeinlass 41 des Elektromotors 30 zugeführt und dient der Kühlung des Elektromotors 30.

Die Ausgleichsbehälteranordnung 60 hat einen Ausgleichsbehälter 62 und eine Druckausgleichsanordnung 64. Die Leitung 206 ist mit dem Ausgleichsbehältereinlass 65 verbunden, und der Ausgleichsbehälterauslass 66 ist mit der Leitung 207 verbunden. Der Ausgleichsbehälter 62 ist teilweise mit dem Kühlmittel 99 gefüllt, und die Oberfläche 63 ist schematisch angedeutet.

Die Druckausgleichsanordnung 64 ist dazu eingerichtet, zumindest zeitweise eine Fluidverbindung zwischen dem Ausgleichsbehälter 62 und der Außenumgebung 61 der Antriebseinheit 20 zu ermöglichen. Hierdurch kann zumindest teilweise ein Druckausgleich zwischen dem Ausgleichsbehälter 62 und der Außenumgebung 61 bewirkt werden. Bei der Außenumgebung 61 handelt es sich bei einem Elektrofahrzeug 10 um die Atmosphäre, also um Luft mit normalem Umgebungsluftdruck, üblicherweise Feuchtigkeit und ggf. Schmutzpartikeln wie Staub und Öle.

Die zweite Pumpe 92 ist über eine Leitung 211 mit einem Wärmetauscher 102 verbunden, und der Wärmetauscher 102 ist über eine Leitung 212 mit zu kühlenden Vorrichtungen 213, 214 und 215 verbunden, welche bspw. ein Getriebe oder eine Servolenkung umfassen. Die zu kühlenden Vorrichtungen 213, 214, 215 sind über eine Leitung 216 mit einem Ölsumpf 217 verbunden, der auch als Ölwanne bezeichnet werden kann. Im Ölsumpf 217 ist ein Kühlmittel 98 für den zweiten Kühlmittelkreislauf 52 vorgesehen, dessen Oberfläche 218 schematisch angedeutet ist. Der Ölsumpf 217 ist über eine Leitung 219 mit einem Filter 220 verbunden, und der Filter 220 ist über eine Leitung 221 mit der zweiten Pumpe 92 verbunden.

Der dritte Kühlmittelkreislauf 53 weist im Ausführungsbeispiel eine Pumpe 231 auf, welche über eine Leitung 232 mit einem Wärmetauscher 233 verbunden ist. Der Wärmetauscher 233 ist über eine Leitung 234 mit einer zu kühlenden Vorrichtung 235 verbunden, bspw. einer Leistungselektronik wie einem Pulswechselrichter, und die Vorrichtung 235 ist über eine Leitung 236 mit dem Wärmetauscher 101 verbunden, um diesem ein schematisch angedeutetes Kühlmittel 97 des dritten Kühlmittelkreislaufs 53 zuzuführen. Der Wärmetauscher 101 ist über eine Leitung 237 mit dem Wärmetauscher 102 verbunden, und der Wärmetauscher 102 ist über eine Leitung 238 mit der Pumpe 231 verbunden. Der Kühlmittelkreislauf 53 dient der Kühlung der Wärmetauscher 101 und 102, und Wärme aus den Kühlmitteln 99 und 98 kann auf das Kühlmittel 97 übertragen werden.

Das Kühlmittel 97 ist bevorzugt eine Mischung, welche Wasser und Glykol aufweist.

Das Kühlmittel 98 ist bspw. Getriebeöl oder Motoröl, und es kann bevorzugt zusätzlich für eine Schmierung genutzt werden.

Das Kühlmittel 99 wird für die Direktkühlung des Elektromotors 30 genutzt, und es ist daher bevorzugt elektrisch nicht leitend oder schlecht leitend. Bevorzugt ist das Kühlmittel 99 ein dielektrisches Kühlmittel. Dielektrische Kühlmittel sind vorteilhaft, da sie elektrisch nicht leitend oder zumindest schlecht leitend sind und daher auch im Elektromotor 30 zur Kühlung der Wicklungsanordnung 38 genutzt werden können. Geeignet ist beispielsweise Kühlmittel auf der Basis von Monoethylenglykol oder auf der Basis eines Gemischs von Methylnonafluor-n-butylether mit Methylnonafluor-iso-butylether, welches als Kühlmittel mit der Bezeichnung R-7100 angeboten wird, oder auf der Basis von Hydrofluorether, welches als Kühlmittel mit der Bezeichnung HFE-7100 angeboten wird.

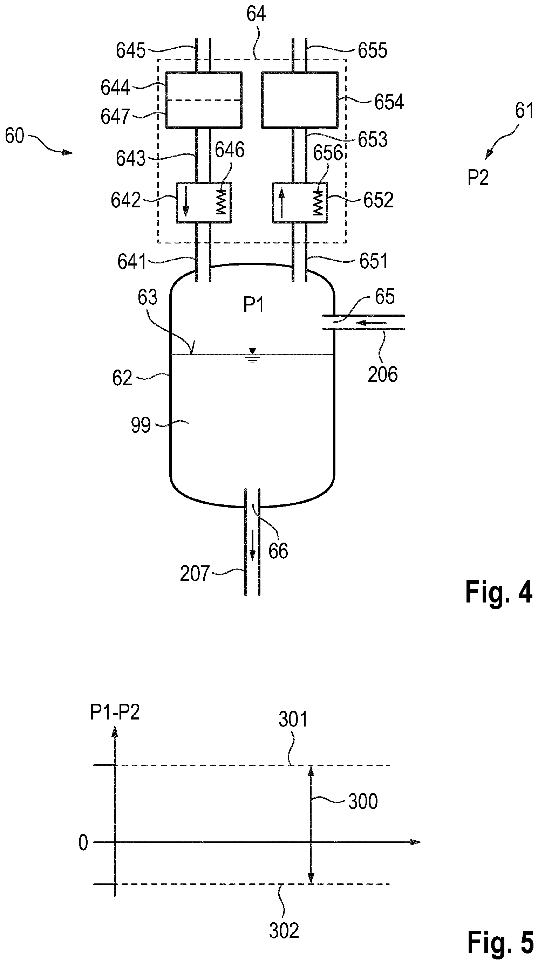

**Fig. 4** zeigt die Ausgleichsbehälteranordnung 60 von Fig. 3.

Der Ausgleichsbehälter 62 ist teilweise mit dem Kühlmittel 99 gefüllt, und die Oberfläche 63 ist schematisch angedeutet. Oberhalb der Oberfläche 63 ist Luft oder ein Kühlmittel-Luft-Gemisch mit verdampftem Kühlmittel. Im Ausgleichsbehälter 62 herrscht ein Druck P1, der insbesondere abhängig ist von der Temperatur des Kühlmittels 99 im Kühlkreislauf 51. Die Druckausgleichsanordnung 64 weist im Ausführungsbeispiel eine mit dem Ausgleichsbehälter 62 verbundene Leitung 641 und eine weitere mit dem Ausgleichsbehälter 62 verbundene Leitung 651 auf.

Die Leitung 641 ist über ein Ventil 642 mit einer Leitung 643 verbunden, und die Leitung 643 ist über eine Entfeuchtungsvorrichtung 644 und eine Filtervorrichtung 647 mit einer zur Außenumgebung 61 offenen Leitung 645 verbunden.

Die Leitung 651 ist über ein Ventil 652 mit einer Leitung 653 verbunden. Die Leitung 653 ist über eine Filtervorrichtung 654 mit einer zur Außenumgebung 61 offenen Leitung 655 verbunden.

Das Ventil 652 ist dazu ausgebildet, von einem nicht leitenden Zustand in einen leitenden Zustand überzugehen, wenn der Druck P1 im Ausgleichsbehälter 62 um mindestens einen vorgegebenen ersten Betrag B1 höher ist als der Druck P2 in der Außenumgebung 61. Hierdurch kann bei einem entsprechenden Überdruck im Ausgleichsbehälter 62 zumindest teilweise ein Druckausgleich bewirkt werden. Der erste Betrag ist ungleich 0, im Ausführungsbeispiel ist also betragsmäßig ein Differenzdruck P1 - P2 > B1 erforderlich, wobei der erste Betrag B1 größer als Null ist, um einen Druckausgleich zu bewirken.

Das Ventil 652 weist im Ausführungsbeispiel eine schematisch angedeutete Feder 656 auf, deren Federkraft die Öffnung des Ventils 652 beeinflusst. Das Ventil 652 kann beispielsweise als Überdruckventil mit einer durch die Feder 656 gegen eine Öffnung gepressten Kugel ausgebildet werden, oder es kann eine Differenzdruckmessvorrichtung vorgesehen werden, welche das steuerbare Ventil 652 bei einer vorgegebenen Druckdifferenz betätigt.

Das Ventil 642 ist dazu ausgebildet, von einem nicht leitenden Zustand in einen leitenden Zustand überzugehen, wenn der Druck P2 in der Außenumgebung 61 um mindestens einen vorgegebenen zweiten Betrag B2 höher ist als der Druck P1 im Ausgleichsbehälter 62. Hierdurch wird bei einem Unterdruck im Ausgleichsbehälter 62 zumindest teilweise ein Druckausgleich bewirkt. Der zweite Betrag ist ungleich 0, im Ausführungsbeispiel ist also betragsmäßig ein Differenzdruck P2 - P1 > B2 erforderlich, wobei der zweite Betrag B2 größer als Null ist, um einen Druckausgleich zu bewirken.

Das Ventil 642 weist bevorzugt eine schematisch angedeutete Feder 646 auf, und der vorgegebene erste Betrag wird bevorzugt durch die Federkraft der zweiten Feder 646 beeinflusst. Das Ventil 642 kann aufgebaut sein wie das Ventil 652, wobei die Montagerichtung umgekehrt ist.

Die Entfeuchtungsvorrichtung 644 ist dazu eingerichtet, eine Entfeuchtung der von aus der Außenumgebung in den Ausgleichsbehälter 62 eintretenden Luft durchzuführen. Dies ist vorteilhaft, da eine Vermischung des Kühlmittels 99 mit Wasser zu einer Erhöhung der elektrischen Leitfähigkeit führt. Eine solche Entfeuchtungsvorrichtung 644 wird auch als Adsorber bezeichnet.

Die Filtervorrichtung 647 ist dazu eingerichtet, einen Eintritt von Schmutz, wie beispielsweise Staub oder Ölen, durch aus der Außenumgebung 61 in den Ausgleichsbehälter 62 eintretende Luft zu verringern oder zu verhindern.

Die Filtervorrichtung 654 ist dazu eingerichtet, einen Austritt des Kühlmittels 99 in die Außenumgebung 61 zu verringern oder zu verhindern. Sofern das Kühlmittel 99, beispielsweise Kohlenwasserstoffe, aufweist, sollten diese nicht in die Außenumgebung 61 gelangen.

Die Filtervorrichtung 654 weist bevorzugt einen Aktivkohlefilter auf.

Im Ausführungsbeispiel sind das Einlassventil 642 und das Auslassventil 652 über getrennte Leitungen 641, 651 mit dem Ausgleichsbehälter 62 verbunden. Alternativ können die Ventile 642, 652 durch ein - nicht dargestelltes - gemeinsames Ventil ausgebildet werden, welches gemeinsame Ventil sowohl bei einem Überdruck als auch bei einem Unterdruck im Ausgleichsbehälter 62 ein Öffnen bzw. ein Leitend-Schalten ermöglicht. Die entsprechenden Vorrichtungen 644, 647 und 654 können in beide Richtungen genutzt werden. In einer weiteren - nicht dargestellten - Ausführungsform sind die Vorrichtungen 644, 647 und 654 zwischen den zugeordneten Ventilen 642, 652 und dem Ausgleichsbehälter 62 vorgesehen.

**Fig. 5** zeigt ein Diagramm, bei dem die Ordinate den Differenzdruck P2 - P1 darstellt. Die Linie 301 gibt den Grenzwert an, bei welchem das Ventil 642 leitend geschaltet wird, wenn der Druck P1 im Ausgleichsbehälter 62 kleiner ist als der Druck P2 in der Außenumgebung 61.

In gleicher Weise gibt die Linie 302 an, ab welchem Differenzdruck P2 - P1 das Ventil 652 leitend schaltet, wenn der Druck P1 im Ausgleichsbehälter 62 größer ist als der Druck in der Außenumgebung 61.

In dem Bereich 300 zwischen den Linien 301 und 302 werden die Ventile 642 und 652 nicht leitend geschaltet, es findet also kein Druckausgleich statt. Im Ergebnis befindet sich der Relativdruck im Ausgleichsbehälter 62 im Bereich 300, und nur bei einem Überschreiben der äußeren Grenzen 301, 302 werden die Ventile 642, 652 leitend.

Das Vorsehen des Bereichs 300 ist vorteilhaft, da bei kleineren Temperaturschwankungen die auftretenden Druckunterschiede zwischen den Drücken P1 und P2 so gering sind, dass keine Gefahr einer Beschädigung des Kühlmittelkreislaufs 51 besteht. Wenn bei den Druckdifferenzen im Bereich 300 andauernd ein Druckausgleich stattfinden würde, würde dies zu einer schnelleren Füllung der Reinigungsvorrichtungen 644, 647, 654 und damit einem erforderlichen Austausch und/oder zu einer Verunreinigung des Kühlmittels 99 führen. Der Fachmann spricht bei einem System, bei dem andauernd ein Druckausgleich auf Grund von Druckschwankungen auftritt, von einem atmenden System. Im Bereich 300 wird ein Atmen verhindert.

Andererseits können die Leitungen des Kühlmittelkreislaufs 51 ausgelegt werden auf die maximalen Differenzdrücke entsprechend der Linien 301 und 302, da eine wesentliche Überschreitung dieser Grenzen durch die Druckausgleichsanordnung 64 verhindert wird.

Es ist zwar möglich, die Druckausgleichsanordnung 64 nicht vorzusehen und stattdessen einen großen Druckausgleichsbehälter vorzusehen. Ein solcher Druckausgleichsbehälter benötigt jedoch viel Raum und führt zu zusätzlichem Gewicht. Daher hat sich die vorliegende Druckausgleichsanordnung 64 als sehr vorteilhaft erwiesen.

Naturgemäß sind im Rahmen der vorliegenden Erfindung vielfältige Abwandlungen und Modifikationen möglich.

## Patentansprüche

1. Antriebseinheit (20) für ein Elektrofahrzeug (10), welche einen Elektromotor (30) zum Antrieb und ein Kühlsystem (50) aufweist, welcher Elektromotor (30) eine Statoranordnung (32) und eine Rotoranordnung (34) aufweist, welche Statoranordnung (32) ein Statorgehäuse (40), einen Statorkern (36) mit Nuten (37) und eine Wicklungsanordnung (38) umfasst, welche Wicklungsanordnung (38) sich durch die Nuten (37) erstreckt, welches Statorgehäuse (40) einen Statorgehäuseeinlass (41) und einen Statorgehäuseauslass (42) aufweist, welche Nuten (37) in Fluidverbindung mit dem Statorgehäuseeinlass (41) und mit dem Statorgehäuseauslass (42) stehen, welches Kühlsystem (50) einen ersten Kühlkreislauf (51) aufweist, welcher mit dem Statorgehäuseeinlass (41) und mit dem Statorgehäuseauslass (42) verbunden ist, um eine direkte Kühlung der Wicklungsanordnung (38) zu ermöglichen, und welcher erste Kühlkreislauf (51) eine Ausgleichsbehälteranordnung (60) aufweist, welche Ausgleichsbehälteranordnung (60) einen Ausgleichsbehälter (62), mindestens einen Ausgleichsbehältereinlass (65), einen Ausgleichsbehälterauslass (66) und eine Druckausgleichsanordnung (64) aufweist, welcher Ausgleichsbehälter (62) über den mindestens einen Ausgleichsbehältereinlass (65) und den Ausgleichsbehälterauslass (66) mit dem ersten Kühlkreislauf (51) verbunden ist, welche Druckausgleichsanordnung (64) dazu eingerichtet ist, zumindest zeitweise eine Fluidverbindung zwischen dem Ausgleichsbehälter (62) und der Außenumgebung (61) der Antriebseinheit (20) zu ermöglichen, um zumindest teilweise einen Druckausgleich zwischen dem Ausgleichsbehälter (62) und der Außenumgebung (61) zu bewirken.

2. Antriebseinheit (20) nach Anspruch 1, bei welcher der erste Kühlkreislauf (51) ein erstes Kühlmittel (99) aufweist.

3. Antriebseinheit (20) nach Anspruch 2, bei welcher das erste Kühlmittel (99) ein dielektrisches Kühlmittel ist.

4. Antriebseinheit (20) nach Anspruch 2 oder 3, bei welcher die Druckausgleichsanordnung (64) eine erste Filtervorrichtung (654) aufweist, welche erste Filtervorrichtung (654) dazu eingerichtet ist, einen Austritt des Kühlmittels (99) in die Außenumgebung (61) zu verringern oder zu verhindern, welche erste Filtervorrichtung (654) bevorzugt einen Aktivkohlefilter aufweist.

5. Antriebseinheit (20) nach einem der vorhergehenden Ansprüche, bei welcher die Druckausgleichsanordnung (64) ein erstes Ventil (652) aufweist, welches dazu ausgebildet ist, von einem nichtleitenden Zustand in einen leitenden Zustand überzugehen, wenn der Druck (P1) im Ausgleichsbehälter (62) um mindestens einen vorgegebenen ersten Betrag höher ist als der Druck (P2) in der Außenumgebung (61), um bei einem Überdruck im Ausgleichsbehälter (62) zumindest teilweise den Druckausgleich zu bewirken, welcher erste Betrag ungleich Null ist.

6. Antriebseinheit (20) nach Anspruch 5, bei welcher das erste Ventil (652) eine erste Feder (656) aufweist, und bei welcher der vorgegebene erste Betrag durch die Federkraft der ersten Feder (656) beeinflusst ist.

7. Antriebseinheit (20) nach einem der vorhergehenden Ansprüche, bei welcher die Druckausgleichsanordnung (64) ein zweites Ventil (642) aufweist, welches dazu ausgebildet ist, von einem nicht leitenden Zustand in einen leitenden Zustand überzugehen, wenn der Druck (P2) in der Außenumgebung (61) um mindestens einen vorgegebenen zweiten Betrag höher ist als der Druck (P1) im Ausgleichsbehälter (62), um bei einem Unterdruck im Ausgleichsbehälter (62) zumindest teilweise den Druckausgleich zu bewirken, welcher zweite Betrag ungleich Null ist.

8. Antriebseinheit (20) nach Anspruch 7, bei welcher das zweite Ventil (642) eine zweite Feder (646) aufweist, und bei welcher der vorgegebene zweite Betrag durch die Federkraft der zweiten Feder (646) beeinflusst ist.

9. Antriebseinheit (20) nach einem der vorhergehenden Ansprüche, bei welcher die Druckausgleichsanordnung (64) eine Entfeuchtungsvorrichtung (644) aufweist, welche Entfeuchtungsvorrichtung (644) dazu eingerichtet ist, eine Entfeuchtung von aus der Außenumgebung in den Ausgleichsbehälter (62) eintretender Luft durchzuführen.

10. Antriebseinheit (20) nach einem der vorhergehenden Ansprüche, bei welcher die Druckausgleichsanordnung (64) eine zweite Filtervorrichtung (647) aufweist, welche zweite Filtervorrichtung (647) dazu eingerichtet ist, einen Eintritt von Schmutz durch aus der Außenumgebung (61) in den Ausgleichsbehälter (62) eintretende Luft zu verringern oder zu verhindern.

11. Antriebseinheit (20) nach einem der vorhergehenden Ansprüche, welche einen zweiten Kühlkreislauf (52) und eine Pumpvorrichtung (90) aufweist, welche Pumpvorrichtung (90) eine erste Pumpe (91) und eine zweite Pumpe (92) aufweist, welche erste Pumpe (91) dazu eingerichtet ist, im ersten Kühlkreislauf (51) ein erstes Kühlmittel (99) zu fördern, und welche zweite Pumpe (92) dazu eingerichtet ist, im zweiten Kühlkreislauf (52) ein zweites Kühlmittel (98) zu fördern, welches erste Kühlmittel (99) und welches zweite Kühlmittel (98) unterschiedlich sind.

12. Antriebseinheit (20) nach Anspruch 11, bei welcher die Pumpvorrichtung (90) dazu eingerichtet ist, die erste Pumpe (91) und die zweite Pumpe (92) durch einen gemeinsamen Pumpenantrieb (93) anzutreiben.

13. Antriebseinheit (20) nach Anspruch 11 oder 12, welche einen dritten Kühlkreislauf (53) aufweist, bei welcher der erste Kühlkreislauf (51) einen ersten Wärmetauscher (101) aufweist und der zweite Kühlkreislauf (52) einen zweiten Wärmetauscher (102) aufweist, und bei welcher der dritte Kühlkreislauf (53) dazu eingerichtet ist, den ersten Wärmetauscher (101) und den zweiten Wärmetauscher (102) zu kühlen.

14. Elektrofahrzeug (10), welches eine Antriebseinheit (20) nach einem der vorhergehenden Ansprüche aufweist.
